# EUROPÄISCHE PATENTSCHRIFT

(11) **EP 3 540 297 B1**
(45) Veröffentlichungstag und Bekanntmachung des Hinweises auf die Patenterteilung: **03.03.2021**
(21) Anmeldenummer: 19160839.7
(22) Anmeldetag: 05.03.2019
(51) Int. Cl.: F21S 41/147, F21S 41/19, F21S 41/33, F21S 41/39, F21S 45/47, F21S 45/49, F21S 41/148

(54) **FAHRZEUGSCHEINWERFER**
VEHICLE HEADLAMP
PHARE DE VÉHICULE

(30) Priorität: 13.03.2018 DE 102018105753
(43) Veröffentlichungstag der Anmeldung: 18.09.2019
(73) Patentinhaber: Marelli Automotive Lighting Reutlingen (Germany) GmbH, 72762 Reutlingen (DE)
(72) Erfinder: Pfitzner, Lothar, 72762 Reutlingen (DE); Heck, Alex, 72760 Reutlingen (DE)
(74) Vertreter: Kohler Schmid Möbus Patentanwälte

(56) Entgegenhaltungen:
- EP-A1- 3 021 040
- EP-A2- 2 674 664
- CN-A- 107 525 005
- DE-A1-102005 033 709
- FR-A1- 3 026 360
- KR-U- 19980 023 125
- US-A1- 2014 268 842

## Beschreibung

Die Erfindung betrifft einen Fahrzeugscheinwerfer mit mindestens einer Lichtquelle, vorzugsweise einer LED und einem Reflektor, nach dem Oberbegriff des Anspruchs 1.

Moderne Fahrzeugscheinwerfer sind aufgrund der besseren Beleuchtungsergebnisse, eines geringeren Energieverbrauchs und eines modernen Designs zunehmend mit LEDs ausgestattet. Je nach Anzahl der verschiedenen zur erfüllenden Beleuchtungsfunktionen wie Abblendlicht, Fernlicht, Standlicht etc. sind eine oder mehrere LEDs und diesen zugeordneten Reflektoren, die für die genaue Lichtstrahllenkung der LEDs sorgen, vorgesehen. Die LEDs und die zugehörigen Reflektoren sind dabei auf einer gemeinsamen Trägerplatte, vorzugsweise einer Leiterplatte montiert. Die relative Position zwischen LED und Reflektor ist dabei entscheidend dafür, dass die Ausleuchtung der Straße den gesetzlichen Vorgaben entspricht. Es sind somit hohe Anforderungen sowohl an die Fertigungstoleranzen der Bauteile als auch an die Toleranzen bei der Positionierung der Bauteile auf der Trägerplatte zu erfüllen. Schon geringe Toleranzüberschreitungen können zu markanten Lichteinbußen und/oder nicht mehr gesetzeskonformen Lichtverteilungen auf der Straße führen.

In der WO 2014/138763 A1 wurde daher ein Scheinwerfermodul vorgeschlagen, bei dem die Leuchteinheit drehbar an einem Kühlkörper festgelegt ist. Außerdem sind Langlöcher in der Trägerplatine und im Kühlkörper für eine Schraubverbindung vorgesehen, die eine Justierung der relativen Position der Bauteile zueinander erlauben. Über das Vorsehen von Lagerspielen zwischen den Bauteilen wird daher die Möglichkeit geschaffen, Toleranzüberschreitungen bei der Bauteilfertigung durch ein Justieren der Bauteilpositionen auszugleichen. Die Montage der Bauteile gestaltet sich dadurch jedoch recht aufwändig.

Die KR 1998 0023125 U offenbart einen Scheinwerfer, dessen Reflektor mit Vorsprüngen versehen ist, die mittels einer Presspassung in Öffnungen in einem Gehäuse befestigbar sind. Auch die CN 107 525 005 A, US 2014/268842 A1 und die DE 10 2005 033709 A1 beschreiben Scheinwerfer mit einem Reflektor, der mittels Press- oder Rastverbindungen an einem Träger befestigt ist. Diese bekannten Scheinwerfer lassen sich somit schnell montieren. Allerdings können diese Rastverbindungen mit der Zeit ermüden und dadurch die Beleuchtungspräzision des Scheinwerfers verändern. In der KR 1998 0023125 U wird daher als Alternative zu einer Rastverbindung eine Schraubverbindung zwischen Reflektor und Gehäuse beschrieben, die jedoch zu den oben erwähnten Schwierigkeiten bezüglich eines Toleranzausgleichs zwischen den Bauteilen führt.

Der vorliegenden Erfindung liegt die Aufgabe zugrunde, einen Fahrzeugscheinwerfer mit einer noch höheren Beleuchtungspräzision bereitzustellen, der rasch zu montieren ist.

Die Aufgabe wird gelöst durch einen Fahrzeugscheinwerfer mit den Merkmalen des Patentanspruchs 1.

Durch die Presspassung zwischen den Reflektorvorsprüngen und den Öffnungen der Trägerplatte sind die Trägerplatte und der Reflektor über alle Toleranzbereiche spielfrei miteinander verbunden. Dadurch kann die Gesamttoleranz der aus den Bauteiltoleranzen und den Positioniertoleranzen des optischen Systems des Scheinwerfers gebildeten Toleranzkette reduziert werden. Dies führt zu einer Qualitätssteigerung des Scheinwerfers sowie zu geringeren Ausschussraten bei der Fertigung. Dabei können aufwändige Justierungen des Reflektors auf der Trägerplatte entfallen. Die Presspassung sorgt für einen automatischen Toleranzausgleich bei der Montage.

Alternativ kann bei gleichbleibender Gesamttoleranz des Scheinwerfers eine Einzeltoleranz des optischen Systems des Scheinwerfers erhöht werden. So kann beispielsweise auf eine Präzisionsbestückung der LED auf der Trägerplatte verzichtet und durch eine Normalbestückung ersetzt werden, wodurch sich deutliche Kosteneinsparungen realisieren lassen.

Die Vorsprünge sind am Umfang von Befestigungslöchern am Reflektor angeordnet. Zusätzlich zur Verbindung über die Presspassungen sind durch die Befestigungslöcher des Reflektors Schrauben hindurchgeführt, um den Reflektor an der Trägerplatte festzulegen. Selbstverständlich besteht jedoch auch die Möglichkeit, den Reflektor auf die Trägerplatte aufzukleben.

Die Schrauben können durch die Öffnungen in der Trägerplatte hindurchgeführt und mit einem auf der Rückseite der Trägerplatte angeordneten Kühlkörper verschraubt sein. Bei den für neuere Fahrzeugscheinwerfer üblicherweise eingesetzten Lichtquellen handelt es sich um Hochleistungs-SMD-LEDs, die direkt auf eine Leiterplatte, die gleichzeitig die Trägerplatte für den Reflektor bildet, aufgelötet sind. Die Verlustleistung dieser LEDs muss abgeführt werden, um eine thermische Beschädigung der LEDs zu vermeiden. Aus diesem Grund liegt die Trägerplatte in der Regel direkt auf einem Kühlkörper auf. Mit Hilfe der Schrauben lässt sich eine fest miteinander verbundene Einheit aus der Trägerplatte, dem Kühlkörper und dem Reflektor herstellen.

Die Öffnungen in der Trägerplatte weisen einen runden Querschnitt mit einem größeren Durchmesser als der Schraubendurchmesser auf. Sie sind damit in der Lage, die Vorsprünge des Reflektors und die Schrauben aufzunehmen.

Weitere Vorteile ergeben sich, wenn der Reflektor je Öffnung in der Trägerplatte mit zwei kreisbogenförmigen Vorsprüngen versehen ist. Diese Vorsprünge können zudem laschenförmig ausgebildet sein. Beim Einführen in die Öffnungen in der Trägerplatte können die Vorsprünge daher radial nach innen gedrückt werden und aufgrund ihrer Elastizität die erforderliche Presspassung mit den Öffnungsrändern in der Trägerplatte herstellen.
Die Vorsprünge können bevorzugt aus einem elastischen Werkstoff, vorzugsweise aus einem Thermoplast gefertigt sein. Diese relativ weichen Vorsprünge sorgen zusammen mit einer entsprechenden Formgebung dafür, dass die Presspassung zwischen Reflektor und Trägerplatte hergestellt werden kann, ohne zu hohe Montagekräfte aufwenden zu müssen, die wiederum zu Bauteilüberlastungen oder einem Verzug insbesondere der Trägerplatte führen würden. Es hat sich gezeigt, dass die Werkstoffelastizität solcher Vorsprünge zum Toleranzausgleich mittels einer Presspassung auch bei einem stark verzugssensiblen optischen System wie einem Fahrzeugscheinwerfer eingesetzt werden kann. Zweckmäßigerweise können in der Trägerplatte zwei Öffnungen zur Befestigung des Reflektors vorgesehen sein, um diesen verdrehsicher auf der Trägerplatte montieren zu können.

Die mindestens eine LED kann dabei auf einer Mittelachse zwischen den beiden Öffnungen auf der Trägerplatte angeordnet sein, sodass die Positionen der Öffnungen und die Position der mindestens einen LED ein gleichschenkliges Dreieck bilden.

Nachfolgend wird ein bevorzugtes Ausführungsbeispiel einer Beleuchtungseinheit eines erfindungsgemäßen Fahrzeugscheinwerfers mit Bezug auf die Zeichnung näher beschrieben.

Dabei zeigen:
- Fig. 1: eine Explosionsdarstellung einer Beleuchtungseinheit eines erfindungsgemäßen Fahrzeugscheinwerfers;
- Fig. 2: eine Draufsicht auf die Beleuchtungseinheit aus Fig. 1;
- Fig. 3: einen Teilschnitt durch die Beleuchtungseinheit entlang der Linie A-A in Fig. 2;
- Fig. 4: eine Ansicht von unten auf einen Reflektor der Beleuchtungseinheit aus Fig. 1 mit einer vergrößerten Detaildarstellung;
- Fig. 5: eine Ansicht von unten auf den Reflektor und eine Trägerplatte der Beleuchtungseinheit aus Fig. 1 zusammen mit einer vergrößerten Detaildarstellung;
- Fig. 6: eine Draufsicht auf die Trägerplatte der Beleuchtungseinheit aus Fig. 1.

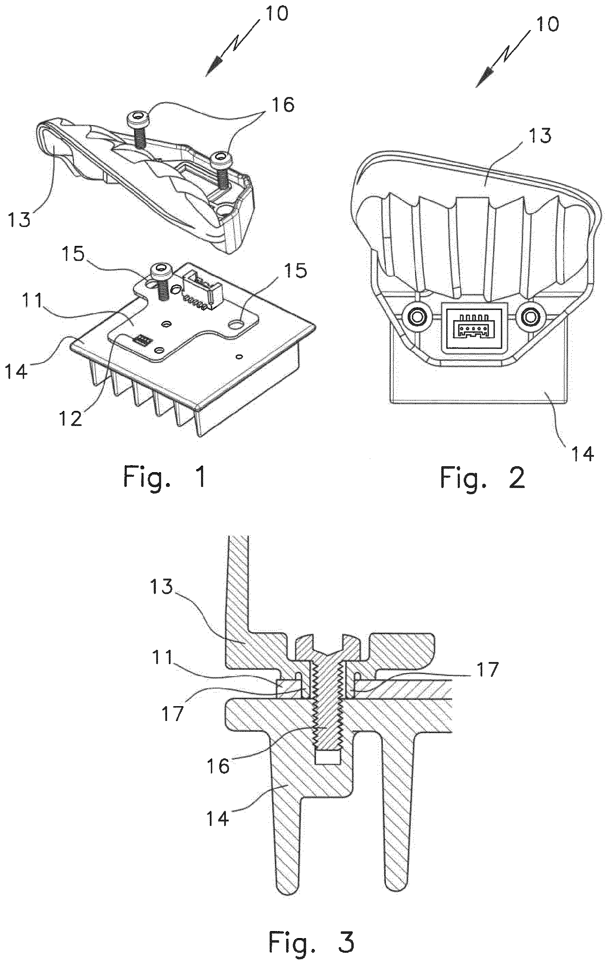

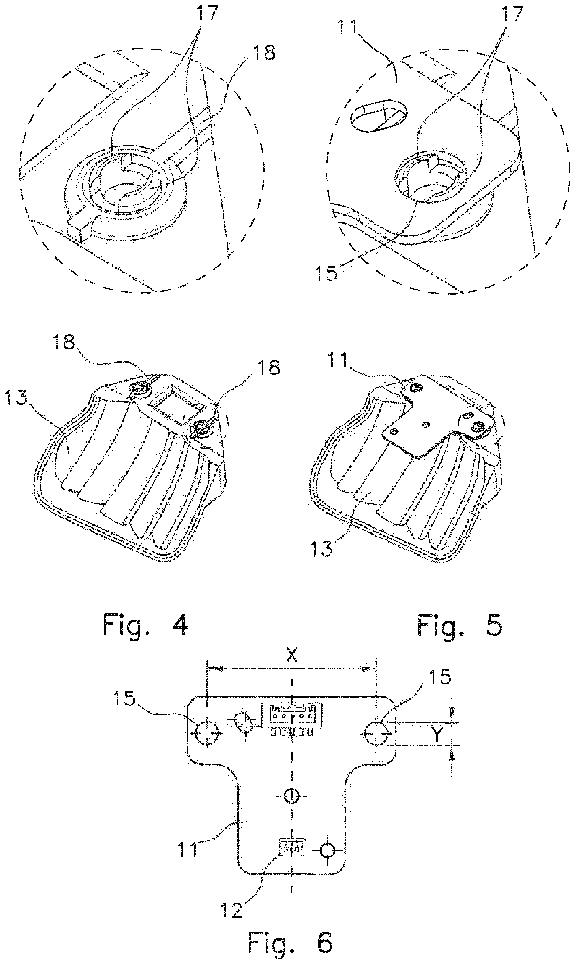

Die Explosionsdarstellung aus Fig. 1 zeigt eine Beleuchtungseinheit 10 eines ansonsten nicht weiter dargestellten Fahrzeugscheinwerfers. Die Beleuchtungseinheit 10 weist eine Trägerplatte 11 in Form einer Leiterplatte mit einer darauf aufgelöteten LED 12 als Lichtquelle, einen Reflektor 13 sowie einen Kühlkörper 14 auf. Die Trägerplatte 11 ist mit zwei Öffnungen 15 zur Aufnahme von Befestigungsschrauben 16 für den Reflektor 13 versehen. Wie die Draufsicht auf die Beleuchtungseinheit 10 und insbesondere die Schnittdarstellung aus Fig. 3 verdeutlichen, wird der Reflektor 13 mit Hilfe der Schrauben 16 mit dem Kühlkörper 14 verschraubt. Mit der Trägerplatte 11 ist der Reflektor 13 dagegen mittels einer Presspassung verbunden, die je Öffnung 15 in der Trägerplatte 11 von zwei Vorsprüngen 17 gebildet wird, wie Fig. 3 und noch deutlicher die Figuren 4 und 5 zeigen.

Aus der Ansicht von unten auf den Reflektor 13 in Fig. 4 ist zu erkennen, dass der Reflektor 13 zwei Befestigungslöcher 18 für die Befestigungsschrauben 16 aufweist. Am äußeren Rand der Befestigungslöcher 18 sind die beiden kreisbogen- und laschenförmigen Vorsprünge 17 angeordnet, die in die Öffnungen 15 der Trägerplatte einführbar sind, wie Fig. 5 verdeutlicht. Die Vorsprünge 17 sind vorzugsweise aus einem weichen, elastischen Werkstoff gefertigt, sodass sie beim Einführen in die Öffnungen 15 der Trägerplatte 11 radial nach innen nachgeben können, damit die Presspassung mit den Öffnungen 15 ohne zu große Montagekräfte herstellbar ist.

Fig. 6 verdeutlicht schematisch die auf der Trägerplatte 11 sich bezüglich der Lichtquelle 12 aufsummierenden Bestückungstoleranzen A und B, wobei A die Toleranz des gegenseitigen Abstands x der beiden Öffnungen 15 und B die Toleranz des Durchmessers y der Öffnungen 15 ist. Durch die Presspassung zwischen dem Reflektor 13 und der Trägerplatte 11 können Toleranzüberschreitungen der Toleranzen A und B teilweise ausgeglichen werden.

Die LED 12 ist auf einer Mittelachse zwischen den Öffnungen 15 angeordnet. Ihre Position bildet somit zusammen mit den Positionen der Öffnungen 15 die Eckpunkte eines gleichschenkligen Dreiecks.

## Patentansprüche

1. Fahrzeugscheinwerfer mit mindestens einer Lichtquelle (12), vorzugsweise einer LED und einem Reflektor (13), die auf einer gemeinsamen Trägerplatte (11) angeordnet sind, wobei am Reflektor (13) Vorsprünge (17) am Umfang von Befestigungslöchern (18) angeordnet sind, die mittels einer Presspassung mit Öffnungen (15) in der Trägerplatte (11) verbunden sind und wobei durch die Befestigungslöcher (18) des Reflektors (13) Schrauben (16) hindurchgeführt sind, **dadurch gekennzeichnet, dass** die Öffnungen (15) in der Trägerplatte (11) einen runden Querschnitt mit einem größeren Durchmesser als der Schraubendurchmesser aufweisen, um die Vorsprünge (17) des Reflektors (13) und die Schrauben (16) aufzunehmen.

2. Fahrzeugscheinwerfer nach Anspruch 1, **dadurch gekennzeichnet, dass** die Schrauben (16) durch die Öffnungen (15) in der Trägerplatte (11) hindurchgeführt und mit einem auf der Rückseite der Trägerplatte (11) angeordneten Kühlkörper (14) verschraubt sind.

3. Fahrzeugscheinwerfer nach Anspruch 1 oder 2 , **dadurch gekennzeichnet, dass** der Reflektor (13) je Öffnung (15) in der Trägerplatte (11) mit zwei kreisbogenförmigen Vorsprüngen (17) versehen ist.

4. Fahrzeugscheinwerfer nach einem der vorhergehenden Ansprüche, **dadurch gekennzeichnet, dass** die Vorsprünge (17) laschenförmig ausgebildet sind.

5. Fahrzeugscheinwerfer nach einem der vorhergehenden Ansprüche, **dadurch gekennzeichnet, dass** die Vorsprünge (17) aus einem elastischen Werkstoff, vorzugsweise aus einem Thermoplast gefertigt sind.

6. Fahrzeugscheinwerfer nach einem der vorhergehenden Ansprüche, **dadurch gekennzeichnet, dass** in der Trägerplatte (11) zwei Öffnungen (15) zur Befestigung des Reflektors (13) vorgesehen sind.

7. Fahrzeugscheinwerfer nach Anspruch 6, **dadurch gekennzeichnet, dass** die mindestens eine LED (12) auf einer Mittelachse zwischen den beiden Öffnungen (15) auf der Trägerplatte (11) angeordnet ist, sodass die Position der Öffnungen (15) und die Position der mindestens einen LED (12) ein gleichschenkliges Dreieck bilden.

## Claims

1. Headlamp comprising at least one light source (12), preferably an LED, and a reflector (13), which are arranged on a common carrier plate (11), projections (17) being arranged on the circumference of fastening holes (18) on the reflector (13), which projections are connected to openings (15) in the carrier plate (11) by means of a press fit, and screws (16) being guided through the fastening holes (18) of the reflector (13), **characterized in that** the openings (15) in the carrier plate (11) have a round cross section that has a larger diameter than the screw diameter in order to receive the projections (17) of the reflector (13) and the screws (16).

2. Headlamp according to claim 1, **characterized in that** the screws (16) are guided through the openings (15) in the carrier plate (11) and are screwed to a heat sink (14) arranged on the rear of the carrier plate (11).

3. Headlamp according to either claim 1 or claim 2, **characterized in that** the reflector (13) is provided with two circular arc-shaped projections (17) for each opening (15) in the carrier plate (11).

4. Headlamp according to any of the preceding claims, **characterized in that** the projections (17) are designed as tabs.

5. Headlamp according to any of the preceding claims, **characterized in that** the projections (17) are made of an elastic material, preferably a thermoplastic.

6. Headlamp according to any of the preceding claims, **characterized in that** two openings (15) for fastening the reflector (13) are provided in the carrier plate (11).

7. Headlamp according to claim 6, **characterized in that** the at least one LED (12) is arranged on a central axis between the two openings (15) on the carrier plate (11), such that the position of the openings (15) and the position of the at least one LED (12) form an isosceles triangle.

## Revendications

1. Phare de véhicule comportant au moins une source lumineuse (12), de préférence une DEL, et un réflecteur (13), qui sont disposés sur une plaque de support (11) commune, des saillies (17) étant disposées sur le réflecteur (13) au niveau de la circonférence de trous de fixation (18), lesquelles saillies étant reliées à des ouvertures (15) dans la plaque de support (11) au moyen d'un ajustement serré, et des vis (16) étant guidées à travers les trous de fixation (18) du réflecteur (13), **caractérisé en ce que** les ouvertures (15) dans la plaque de support (11) présentent une section transversale ronde possédant un diamètre plus grand que le diamètre de la vis afin de recevoir les saillies (17) du réflecteur (13) et les vis (16).

2. Phare de véhicule selon la revendication 1, **caractérisé en ce que** les vis (16) sont guidées dans la plaque de support (11) à travers les ouvertures (15) et sont vissées sur un dissipateur thermique (14), disposé sur la face arrière de la plaque de support (11).

3. Phare de véhicule selon la revendication 1 ou 2, **caractérisé en ce que** le réflecteur (13) est pourvu de deux saillies (17) en forme d'arc de cercle pour chaque ouverture (15) dans la plaque de support (11).

4. Phare de véhicule selon l'une des revendications précédentes, **caractérisé en ce que** les saillies (17) sont conçues sous forme de languette.

5. Phare de véhicule selon l'une des revendications précédentes, **caractérisé en ce que** les saillies (17) sont constituées d'une matière élastique, de préférence d'un thermoplastique.

6. Phare de véhicule selon l'une des revendications précédentes, **caractérisé en ce que** deux ouvertures (15) sont prévues dans la plaque de support (11) afin de fixer le réflecteur (13).

7. Phare de véhicule selon la revendication 6, **caractérisé en ce que** l'au moins une DEL (12) est disposée sur un axe central entre les deux ouvertures (15) sur la plaque de support (11), de sorte que la position des ouvertures (15) et la position de l'au moins une DEL (12) forment un triangle isocèle.
